# EUROPÄISCHE PATENTSCHRIFT

(11) **EP 2 457 780 B1**
(45) Veröffentlichungstag und Bekanntmachung des Hinweises auf die Patenterteilung: **01.05.2013**
(21) Anmeldenummer: 11008449.8
(22) Anmeldetag: 20.10.2011
(51) Int. Cl.: B60R 21/18

(54) **Gaslanze für einen Airbelt, Airbelt und Verfahren zur Montage einer Gaslanze in einem Airbelt**
Gas lance for an air belt, air belt and method for fitting a gas lance in an air belt
Lance à gaz pour une ceinture de sécurité gonflable, ceinture de sécurité gonflable et procédé de montage d'une lance à gaz dans une ceinture de sécurité gonflable

(30) Priorität: 26.11.2010 DE 102010052652
(43) Veröffentlichungstag der Anmeldung: 30.05.2012
(73) Patentinhaber: Berger GmbH & Co. Holding KG, 73553 Alfdorf (DE)
(72) Erfinder: Celik, Murat, 73540 Heubach (DE)
(74) Vertreter: Fischer, Matthias

(56) Entgegenhaltungen:
- EP-B1- 1 056 894
- WO-A1-2010/051924

## Beschreibung

Die Erfindung betrifft eine Gaslanze für einen Airbelt und mit einer Gaslanze versehene Airbelts für Personenrückhaltesysteme, insbesondere für Fahrzeuge zu Wasser, zu Lande und in der Luft, sowie ein Verfahren zur Montage der Gaslanze in Airbelts.

Aus der EP 1 056 894 B1 ist ein aufblasbares Gurtband, ein sog. Airbelt, bekannt, in welchem eine in seinen Innenraum ragende Gasversorgungsleitung, eine sog. Gaslanze, gezeigt wird. Die Gaslanze fördert im Einsatzfall des Airbelts, also bei einem Unfall, von einem Generator erzeugtes Aufblasgas in den Innenraum des Airbelts und bläst diesen dabei auf, um eine Person, welche infolge der während des Unfalls auftretenden Kräfte aus dem Sitz und aber eben gegen den genannten Airbelt gedrängt wird, abzufangen und zu schützen. Die Gaslanze wird üblicherweise von dem Generatoranschluss-Ende des Airbelts her in den Airbelt eingeführt, dort mit seinem unteren oder Einblasende befestigt und endet mit seinem anderen, offenen Ende im Inneren des Airbelts.

Um die Position dieses offenen Endes im Innenraum des Airbelts festzulegen wurden verschiedene nicht zufriedenstellende Versuche durchgeführt. Obwohl in Airbelts angeordnete Gaslanzen seit mehr als zehn Jahren eingesetzt wurden, wurde eine zuverlässige Befestigung bisher nicht gefunden. Folgende Problemlösungen wurden ohne Erfolg versucht: Kleben, Besticken, Befestigung mit Gurtknopf (Zungenstopper) oder auch Verschweißen (mittels Laser, Hitze, Ultraschall etc.). Die ungehemmte bzw. ungebändigte Bewegungsenergie des oberen offenen Endes der Gaslanze konnte durch Anbringung derselben z. B. durch Ankleben an der Innenwand des Airbelts nicht aufgefangen werden, was oft zur Verletzung der Wand des Airbelts und damit zum Totalausfall führte. Auch hat sich gezeigt, dass eine Kontrolle der korrekten Klebung oder Verschweißung des Endes der Gaslanze im Airbelt nicht einfach durchzuführen ist, da das offene Ende der Gaslanze innerhalb des Airbelts liegt. Betreffend die Gewährleistung für einen Airbelt als Sicherheitsteil ist dies ein großes Problem. So wünscht der Kunde nämlich auch, dass die Gaslanze sich über einen Lebenszyklus hinaus, relativ betrachtet, nicht in seiner Position verändert und unter keinen Umständen aufstaucht. In diesem Fall wäre ebenfalls ein Funktionsversagen die Ursache. Es hat sich als wichtig herausgestellt, das Ende der Gaslanze am oberen offenen Ende zu befestigen. Dennoch darf die Befestigung keine Nachteile mit sich bringen, welche die Funktion gefährden, z. B. Funktionsverlust, Festigkeitsverlust oder Komfortverlust etc., wie oben geschildert wurde.

Der Erfindung liegt die Aufgabe zugrunde, eine Gaslanze zur Anordnung im Inneren eines Airbelts, einen Airbelt, sowie ein Verfahren zur Montage einer Gaslanze in einem Airbelt vorzuschlagen, wobei die aus dem Stand der Technik bekannten Nachteile vermieden oder zumindest stark verringert werden.

Die Aufgabe wird zunächst gelöst mit einer Gaslanze zur Anordnung im Inneren eines Airbelts für Personenrückhaltesysteme, insbesondere für Fahrzeuge zu Wasser, zu Lande und in der Luft, wobei der Airbelt ein unteres oder Generator-Ende, und ein oberes oder Retraktor-Ende aufweist, die gekennzeichnet ist durch folgende Merkmale:
a) die Gaslanze hat ein unteres Ende und
b) ein oberes offenes Ende,
c) im Bereich des oberen Endes sind ein oder mehrere Halte- bzw. Zugmittel angebracht, welche sich von dort bis in den Bereich des oberen oder Retraktor-Endes des Airbelts hinein erstrecken.

Eine derartige Ausbildung der Gaslanze ist deshalb so vorteilhaft, da sie nun beim Verbau in einem Airbelt an beiden Enden befestigt und gehalten werden kann, ohne dass sie die Wandung des Airbelts, welcher in den meisten Fällen ein gegenüber einer Gaslanze zartes Gewebe darstellt, belastet und damit beim Aufblasen zu zerstören droht. Jedermann kennt das Phänomen der unkontrollierten "wilden" Bewegung des offenen Endes eines frei herumliegenden Wasserschlauchs, wenn in diesen vom anderen Ende her plötzlich Wasser eingespeist wird. Im Prinzip geschieht beim explosionsartigen Aufblasen eines Airbelts durch eine Gaslanze das Gleiche, nur in extrem stärkerer Ausprägung und Wirkung.
In einer vorteilhaften Ausbildung der Erfindung ist die Gaslanze dadurch gekennzeichnet, dass mehrere Halte- bzw. Zugmittel an mehreren Stellen des oberen Endes gleichmäßig verteilt angeordnet und dann im weiteren Verlauf zum oberen oder Retraktor-Ende zu *einem* Halte- bzw. Zugmittel zusammengeführt sind. Diese Ausbildung der Gaslanze hat den Vorteil, dass die gleichmäßige Anbindung des oberen Endes der Gaslanze auch gewährleistet, dass die Gaslanze im Airbelt nicht "wild herumwirbeln" und das Airbeltgewebe beschädigen kann, wenn der Airbelt aufgeblasen wird.

In einer weiteren vorteilhaften Ausbildung der Erfindung ist die Gaslanze dadurch gekennzeichnet, dass die Halte- bzw. Zugmittel flexible bzw. leicht biegsame faden-, schnur- oder bandartige Strukturen sind. Diese Ausbildung hat den Vorteil, dass die Gaslanze und ihre Halte- bzw. Zugmittel ganz individuell auf die jeweiligen Anforderungen betreffend Belastung, Komfort etc. ausgebildet werden kann.

Die Aufgabe wird weiterhin gelöst mit einem Airbelt, welcher eine erfindungsgemäße Gaslanze aufweist.

Die Aufgabe wird weiterhin gelöst mit einem Verfahren, das dadurch gekennzeichnet ist, dass die erfindungsgemäße Gaslanze über ihr Schnursystem in den Airbelt eingezogen wird.

Zum besseren Verständnis der Erfindung wird diese im Folgenden anhand eines Ausführungsbeispiels mit Hilfe einer Zeichnung kurz beschrieben.

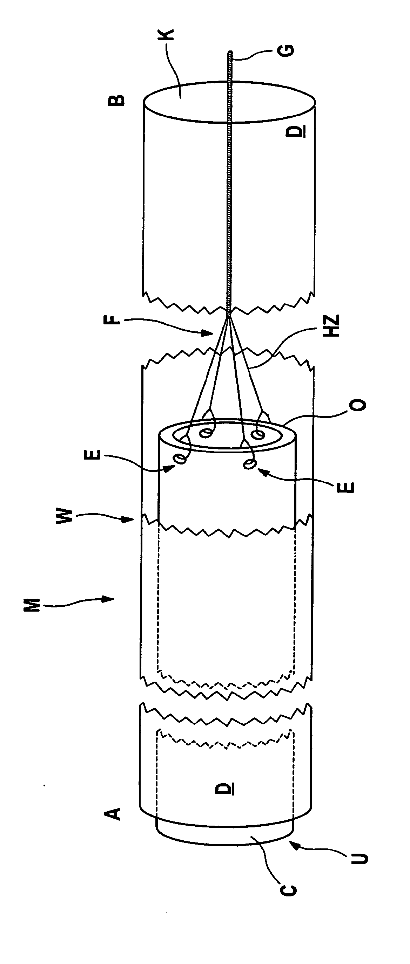

- Fig. 1: zeigt stark schematisiert eine perspektivische Seitenansicht eines teilweise gebrochen und durchsichtig dargestellten Airbelts, in dem eine Gaslanze gemäß der Erfindung angeordnet ist.

In Fig. 1 ist eine obere oder vordere Gewebelage D eines schlauchartigen Gebildes, welches einen Airbelt M darstellen soll, gezeigt. Die untere oder hintere Gewebelage K ist in dieser Darstellung meist verdeckt und nur auf der rechten Seite in Fig. 1 zu sehen. Die in Fig. 1 linke Seite soll das untere oder Generator-Ende A des Airbelts M und die in Fig. 1 rechte Seite des Airbelts M soll das obere oder Retraktor-Ende B des Airbelts M darstellen. Im in Fig. 1 linken Teil des abgeschnitten dargestellten Airbelts M ist der besseren Übersicht halber ab der Stelle W die obere oder vordere Gewebelage D weggelassen worden.
Da der Fachmann den Airbelt im Wesentlichen kennt wird er in dieser Beschreibung zur Vereinfachung der Darstellung als einfaches Rohr gezeigt. Tatsächlich enthält ein Airbelt innen zusammengefaltete Gewebelagen, welche sich beim Aufblasen entfalten und eine schlauchartige Struktur bilden. Im Inneren des in Wirklichkeit wesentlich längeren und deshalb abgeschnitten gezeigten Airbelts M ist eine ebenfalls abgeschnittene Gaslanze C angeordnet, welche ein unteres Ende U und ein oberes offenes Ende 0 hat. Im Bereich des unteren Endes U wird die Gaslanze C in der Regel an einem (nicht gezeigten) Generator oder einem Diffusor, über welche das Aufblasgas in die Gaslanze C gespeist wird, z. B. mittels einer (nicht gezeigten) Halteschelle angebracht. Das obere offene Ende O der Gaslanze C liegt dagegen im Inneren des Airbelts an der Ausblasstelle des Generatorgases frei und kann, wie bereits oben geschildert, falls er - wie aus dem Stand der Technik bekannt - ungesichert ist, beim explosionsartigen Aufblasen chaotisch um sich schlagen und den Airbelt beschädigen oder gar ganz zerstören.

Hier in der Fig. 1 ist die Gaslanze jedoch erfindungsgemäß mittels der Halte- bzw. Zugmittel HZ, welche einerseits in einer oder mehreren Positionen E am oberen offenen Ende O der Gaslanze C und andererseits im Bereich des oberen oder Retraktor-Endes B des Airbelts M befestigbar, da sich die Halte- bzw. Zugmittel HZ bis dort hinein erstrecken. In der gezeigten Ausführung sind die Halte- bzw. Zugmittel HZ entlang des Umfangs des oberen Endes O der Gaslanze C an mehreren Positionen E gleichmäßig verteilt an der Gaslanze C befestigt und erstrecken sich über einen Bereich F, in dem sie gleichsam zusammengeführt und -gezwirnt werden zu einem Faden- oder Schnursystem G. Das Schnursystem G kann dann problemlos mit dem oberen Ende B des Airbelts M am oder im (nicht gezeigten) Retraktor in bekannter Weise befestigt werden.

Es lässt sich nach dieser Erläuterung leicht nachvollziehen, wie die Gaslanze C bei der Durchführung des erfindungsgemäßen Verfahrens ohne besonderen Aufwand über das Schnursystem G in den Airbelt M ein- und in Position gezogen werden kann. Die Einführung der Gaslanze C wird wesentlich vereinfacht, da sie anhand des Schnursystems G einfach nur "gezogen" und nicht wie bisher "geschoben" wird.

## Patentansprüche

1. Gaslanze zur Anordnung im Inneren eines Airbelts (M) für Personenrückhaltesysteme, insbesondere für Fahrzeuge zu Wasser, zu Lande und in der Luft, wobei der Airbelt (M) ein unteres oder Generator-Ende (A), und ein oberes oder Retraktor-Ende (B) aufweist, **gekennzeichnet durch** folgende Merkmale:
a) die Gaslanze hat ein unteres Ende (U) und
b) ein oberes offenes Ende (O),
c) im Bereich des oberen Endes (O) sind ein oder mehrere Halte- bzw. Zugmittel (HZ) angebracht, welche sich von dort bis in den Bereich des oberen oder Retraktor-Endes (B) des Airbelts (M) hinein erstrecken.

2. Gaslanze nach Anspruch 1, **dadurch gekennzeichnet, dass** mehrere Halte- bzw. Zugmittel (HZ) an mehreren Stellen des oberen Endes (O) gleichmäßig verteilt angeordnet und dann im weiteren Verlauf zum oberen oder Retraktor-Ende zu *einem* Halte- bzw. Zugmittel (HZ) zusammengeführt sind.

3. Gaslanze nach Anspruch 1 oder 2, **dadurch gekennzeichnet, dass** die Halte- bzw. Zugmittel (HZ) flexible faden-, schnur- oder bandartige Strukturen sind.

4. Airbelt (M), **dadurch gekennzeichnet, dass** er eine Gaslanze (C) nach einem der vorhergehenden Ansprüche aufweist.

5. Verfahren zur Montage einer Gaslanze (C) nach einem der Ansprüche 1 bis 3 in einem Airbelt (M) nach Anspruch 4, **dadurch gekennzeichnet, dass** die Gaslanze (C) über das Schnursystem (G) in den Airbelt (M) eingezogen wird.

## Claims

1. Gas lance for installation inside an air belt (M) for person restraint systems, in particular for vehicles on water, on land and in the air, with the air belt (M) exhibiting a lower or generator end (A) and an upper or retractor end (B), **characterised by** the following features:
a) the gas lance has a lower end (U) and
b) an upper open end (O),
c) in the vicinity of the upper end (O), one or more retaining and pulling features (HZ) are fitted, which extend from there into the area of the upper or retractor end (B) of the air belt (M).

2. Gas lance in accordance with Claim 1, **characterised by** the fact that several retaining and pulling features (HZ) are arranged in an even distribution at several points of the upper end (O) and then as they approach the upper or retractor end are grouped together in one retaining and pulling feature (HZ).

3. Gas lance in accordance with Claim 1 or 2, **characterised by** the fact that the retaining and pulling features (HZ) are flexible thread, cord or strap-like structures.

4. Air belt (M), **characterised by** the fact that it exhibits a gas lance (C) in accordance with one of the preceding claims.

5. Method for fitting a gas lance (C) in accordance with one of Claims 1 to 3 in an air belt (M) in accordance with Claim 4, **characterised by** the fact that the gas lance (C) is pulled into the air belt (M) using the cord system (G).

## Revendications

1. Lance à gaz destinée à être placée à l'intérieur d'une ceinture de sécurité gonflable (M) pour dispositifs de retenue de passagers, en particulier pour véhicules maritimes, terrestres et aériens, la ceinture de sécurité gonflable (M) disposant d'une extrémité inférieure ou extrémité du générateur (A) et d'une extrémité supérieure ou extrémité du rétracteur (B), **caractérisée par** les caractéristiques suivantes :
a) la lance à gaz présente une extrémité inférieure (U) et
b) une extrémité supérieure ouverte (O),
c) dans la zone de l'extrémité supérieure (O) sont disposés un ou plusieurs moyens de maintien ou de traction (HZ) s'étendant depuis cette zone et jusqu'à la zone de l'extrémité supérieure ou extrémité du rétracteur (B) de la ceinture de sécurité gonflable (M).

2. Lance à gaz selon la revendication 1, **caractérisée en ce qu'**un ou plusieurs moyens de maintien ou de traction (HZ) sont disposés de façon régulière à plusieurs endroits de l'extrémité supérieure (O) pour être réunis ensuite en un seul moyen de maintien ou de traction (HZ) au niveau de l'extrémité supérieure ou extrémité du rétracteur.

3. Lance à gaz selon la revendication 1 ou 2, **caractérisée en ce que** les moyens de maintien ou de traction (HZ) sont des structures flexibles à la manière de ficelles, cordes ou rubans.

4. Ceinture de sécurité gonflable (M), **caractérisée en ce qu'**elle présente une lance à gaz (C) selon l'une des revendications précédentes.

5. Procédé pour le montage d'une lance à gaz (C) selon l'une des revendications 1 à 3 dans une ceinture de sécurité gonflable (M) selon la revendication 4, **caractérisé en ce que** la lance à gaz (C) est introduite dans la ceinture de sécurité gonflable (M) en la tirant par le système de cordon (G).
